# EUROPEAN PATENT APPLICATION

(11) **EP 3 457 342 A1**
(43) Date of publication of application: **20.03.2019**
(21) Application number: 16893476.8
(22) Date of filing: 09.03.2016
(51) Int. Cl.: G06Q 10/10

(54) **DEVICE OPERATION INFORMATION COLLECTION SYSTEM**

(71) Applicant: Shimadzu Corporation, Kyoto-shi, Kyoto 604-8511 (JP)
(72) Inventor: RYODEN, Akimi, Kyoto-shi Kyoto 604-8511 (JP); YAMAMOTO, Koki, Kyoto-shi Kyoto 604-8511 (JP)
(74) Representative: Kilian Kilian & Partner
(86) International application number: PCT/JP2016/057419
(87) International publication number: WO 2017/154144

(57) **Abstract**

A device-operation information collection system includes: a storage section 51 in which operating-state specification information that is individually allocated to one or a plurality of devices 10 to be managed, and relates to change in specified physical property, which occurs only during an operating state, at a specified part M of the devices to be managed; a measurement unit 11a attached to each of the one or a plurality of devices 10 to be managed, configured to measure the specified physical property at the specified part M of each of the devices 10 to be managed; a measurement signal receiver 54 configured to receive a measurement signal or measurement signals from the measurement unit or each of a plurality of measurement units; an operating-state determiner 55 configured to compare a change in the received measurement signal, with the operating-state specification information for each of the one or a plurality of devices 10 to be managed, to thereby determine the state of operation for each of the one or a plurality of devices 10 to be managed; and an operating-time calculator 56 configured to calculate an operating time period of each of the one or a plurality of devices 10 to be managed operates, from a result of determination by the operating-state determiner 55.

## Description

### TECHNICAL FIELD

The present invention relates to a device-operation information collection system that collects information relating to the state of operation of an analysis device and such a device to be managed.

### BACKGROUND ART

Research and development under various subjects have been conducted in research institutes including universities and companies. A wide variety of analysis devices depending on such subjects and methods for approaching the subjects have been used. For keeping the reliability on analysis results obtained by these analysis devices, it is necessary to appropriately manage expendables and the like to be used in these analysis devices.

Patent Literature 1 proposes a system for managing analysis devices and expendables which are used in research institutes. The system disclosed in Patent Literature 1 uses a vibration sensor, a temperature sensor or an optical sensor attached to the analysis device and the expendables to determine the operation/suspension of an analysis device. The system can also manage the residual amount of the expendables using a pressure sensor or a gravity sensor.

### CITATION LIST

### PATENT LITERATURE

Patent Literature 1: JP 2014-501991 A

### SUMMARY OF INVENTION

### TECHNICAL PROBLEM

In research institutes, new needs relating to analysis devices emerge with the advancement of their research and development as well as due to a change in the subject of the research and development or in the approaching methods. However, the number of analysis devices that can be arranged in an analysis room is limited. Accordingly, it is necessary to locate an analysis device with a low operation rate among the currently used analysis devices, and to replace the located analysis device with another one that can address new needs. For such management, the operation rate of each the analysis device should be known in addition to the measurement for determining the operation/suspension of the present analysis devices or the management of the residue amount of the expendables.

The operation rate of an analysis device can be calculated from log files recorded in a computer that controls the analysis device. In general, the analysis devices each of which performs a different type of analysis are individually controlled by the corresponding one of the computers. In these computers, the log files are individually recorded in different formats. Accordingly, for obtaining the operation rates of a wide variety of analysis devices, log files recorded in a plurality of computers in different formats should be analyzed. Such a task takes time and labor.

Such a problem is not limited to analysis devices as mentioned in the previous example. A similar problem may also occur in the management of production devices or the like.

A purpose of the present invention is to provide a device-operation information collection system that can easily collect information required for obtaining the operation rates of devices to be managed.

### SOLUTION TO PROBLEM

The present invention developed for solving the previously described problem is a device-operation information collection system that includes:
a) a storage section in which operating-state specification information is stored, the operating-state specification information being allocated to each of one or a plurality of devices to be managed, and relating to a change in a specified physical property which occurs only during an operating state at a specified part of each of the one or a plurality of devices to be managed:
b) a measurement unit that is attached to each of the one or a plurality of devices to be managed, configured to measure the specified physical property at the specified part of each of the one or a plurality of the devices to be managed;
c) a measurement signal receiver configured to receive a measurement signal or measurement signals from the measurement unit or a plurality of measurement units;
d) an operating-state determiner configured to compare a change in the received measurement signal with the operating-state specification information for each of the one or a plurality of devices to be managed, to thereby determine the state of operation for each of the one or a plurality of devices to be managed; and
e) an operating-time calculator configured to calculate an operating time period of each of the one or a plurality of devices to be managed, from a result of determination by the operating-state determiner.

In the device-operation information collection system according to the present invention, the measurement unit is attached to a part of each of the devices to be managed, at which a distinctive change in a physical property occurs during the operation of the device to be managed (This corresponds to the above-mentioned "specified part". This may be an area in the vicinity of the specified part). Then, a change in the measurement signal obtained from the measurement unit is compared with the operating-state specification information previously stored in the storage section, to determine whether or not the device concerned is in the operating state. The result of the determination is used to calculate an operating time period.

In the system, an operator merely needs to store in advance the operating-state specification information in the storage section. Using this information, the system can automatically determine the state of operation of each of the devices to be managed, and calculate the operating time period. Accordingly, the operation rate of each of the devices to be managed can be easily obtained.

Examples shown below can be considered as the "change in a specified physical property at a specified part of the device which occurs only during an operating state".

In an analysis device provided with an autosampler (e.g. liquid chromatograph), vibration occurs from a motor for driving an arm during a process of collecting a sample liquid. Accordingly, the motor can serve as the specified part, and the period and magnitude of the vibration can correspond to the change in physical property mentioned above.

In an atomic absorption spectrometer using a flame method, combustible gas, such as acetylene gas, is combusted in the process of atomizing a sample in an atomization unit. Accordingly, the atomization unit can serve as the specified part, and a change in its temperature can correspond to the change in physical property mentioned above. Alternatively, the amount of light emitted from the flame of the combustible gas can correspond to the change in physical property.

In an atomic absorption spectrometer using a furnace method, a sample is placed in a heating furnace made of graphite, and electrical current is supplied to the furnace to increase its temperature and thereby atomize the sample. Accordingly, the heating furnace can serve as the specified part, and the change in the temperature or the amount of light from the graphite can correspond to the change in physical property mentioned above.

Any of the changes in physical property mentioned in the above examples is a type of change that occurs only during execution of an analysis and does not occur during a standby time for the analysis (i.e. during a time period where the device is powered on but no analysis is being performed yet). The use of such a change in physical property enables the calculation of an accurate operation rate exclusive of the standby time for the analysis.

As the measurement unit, any type of sensor suitable for measuring the physical property concerned can be used, such as a vibration sensor, a temperature sensor, an optical sensor, a current meter, or a voltmeter.

The measurement unit for detecting a change in physical property in a device to be managed needs to be attached to the device or be located in the vicinity of the device. On the other hand, it is not necessary for the storage section, the measurement signal receiver, the operating-state determiner, and the operating-time calculator, to be located in the vicinity of the device to be managed.

Accordingly, in the device-operation information collection system, it is preferable that the measurement unit and the measurement signal receiver are each configured to send and receive measurement signals through a wireless communication interface. The wireless communication interfaces may allow the measurement unit and the measurement signal receiver to directly send and receive the measurement signals, or indirectly through existing wireless networks. With this configuration, for example, components of the system other than the measurement unit can be disposed outside the analysis room in which the device to be managed is disposed, or information relating to the state of operation of a plurality of devices to be managed which are arranged in different locations can be collected into a single system.

The operating-state determiner may be configured to create data in which the measurement signals received from the measurement unit are accumulated for a predetermined time period, and use the data for determining the state of operation of each of the devices to be managed. For example, in a liquid chromatograph provided with an autosampler, a plurality of samples to be analyzed are often measured continuously under the same conditions. In such a case, vibrations periodically occur due to a motor repeatedly collecting the samples, Therefore, the state of operation of the liquid chromatograph can be determined by creating data in which the measurement signals are accumulated for a predetermined time period (one day, for example), and extracting a periodic change in physical property from the data.

### ADVANTAGEOUS EFFECTS OF INVENTION

With the device-operation information collection system according to the present invention, it is easy to collect information necessary for obtaining an operation of a device to be managed.

### BRIEF DESCRIPTION OF DRAWINGS

Fig. 1 is a schematic configuration diagram showing a device-operation information collection system according to an embodiment of the present invention.
Fig. 2 shows an example of operating-state specification information in the device-operation information collection system according to the present embodiment.
Fig. 3 shows an example of accumulated data of output signals from a measurement unit in the device-operation information collection system according to the present embodiment.
Fig. 4 is a flowchart showing the operation of an operating-state determiner and an operating-time calculator in the device-operation information collection system according to the present embodiment.
Fig. 5 is another flowchart showing the operation of the operating-state determiner in the device-operation information collection system according to the present embodiment.
Fig. 6 shows a specific example of the processing of accumulated data of output signals from a vibration sensor in the device-operation information collection system according to the present embodiment.
Fig. 7 is another flowchart showing the operation of the operating-time calculator in the device-operation information collection system according to the present embodiment.

### DESCRIPTION OF EMBODIMENTS

A device-operation information collection system according to an embodiment of the present invention is described as follows, with reference to the drawings. The embodiment relates to the device-operation information collection system that collects information relating to the operating states of a plurality of analysis devices arranged in an analysis room 1.

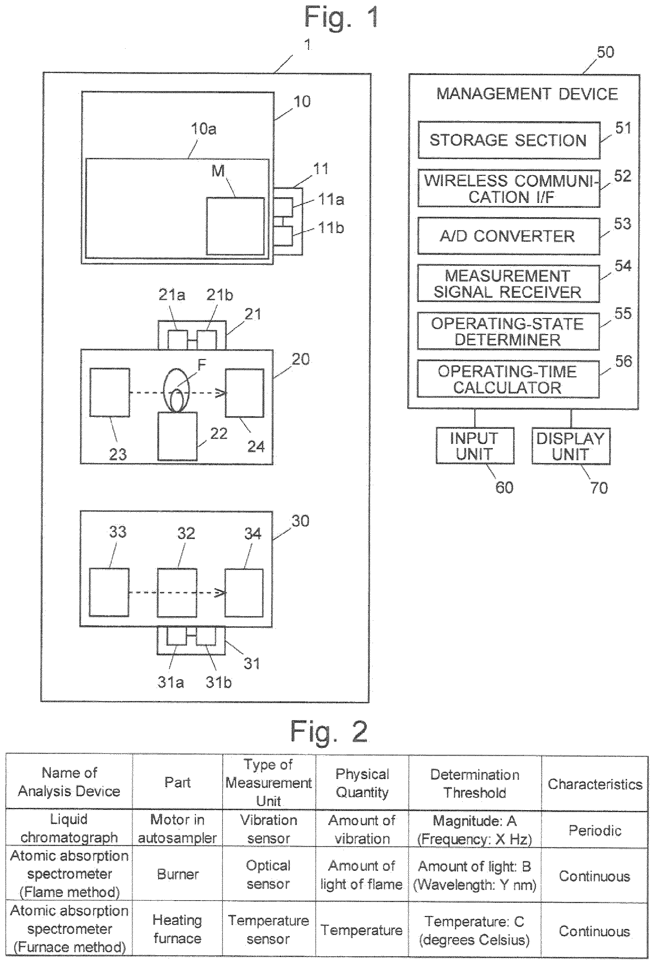

Fig. 1 shows a schematic configuration of a device-operation information collection system. In the present embodiment, the analysis devices disposed in the analysis room 1 include a liquid chromatograph 10 with an autosampler 10a, an atomic absorption spectrometer 20 that measures a sample with a flame method, and an atomic absorption spectrometer 30 that measures a sample with a furnace method. These are all commercially available analysis devices. Each of the analysis devices has a housing to which a measurement unit 11, 21 or 31 is attached. Each of the measurement units includes: a sensor for measuring a change in a physical property at a specified part of the respective analysis device; and a wireless communication interface. Output signals from each of the sensors are sent through the corresponding wireless communication interface to a management device 50 disposed in a management room, which is different from the analysis room 1.

In the liquid chromatograph 10, sample liquids are sequentially collected from a plurality of sample containers by the autosampler 10a, and are introduced into a column in the liquid chromatograph 10 so as to be analyzed. In the autosampler 10a, an arm is operated by a motor M as the driving source, and the sample liquids are collected using a sampling needle provided at the distal end of the arm.

In the present embodiment, a vibration sensor 11a is attached to the outer wall of the housing of the autosampler 10a at a position corresponding to the location of the motor M inside the housing, to detect vibration of the housing caused by the operation of the motor M. Output signals from the vibration sensor 11a are sent to the wireless communication interface 11b, and then transmitted to the management device 50 (described later) through a wireless communication network (not shown).

In the liquid chromatograph 10, another motor, which is used in a liquid supply pump that supplies a mobile phase to the column, also generates vibration. Here, in the liquid chromatograph, the liquid supply pump is normally operated to continuously introduce the mobile phase into the column not only during the analysis period but also during the preparation period for the analysis as well as the standby period for the analysis. Accordingly, the vibration of the motor in the liquid supply pump cannot be used for distinguishing between the operating state (during execution of the analysis) and non-operating state (during the preparation period or standby period for the analysis).

Meanwhile, the vibration in the autosampler 10a occurs only when a sample liquid is collected. Therefore, by detecting this vibration, it can be confirmed that the liquid chromatograph 10 is in the operating state (during execution of the analysis). In other words, in the liquid chromatograph 10 according to the present embodiment, the vibration sensor 11a works as the measurement unit; the motor M of the autosampler 10a corresponds to the specified part; and the period and magnitude of the vibration of the motor M correspond to the specified physical property.

In the atomic absorption spectrometer 20 that measures a sample with a flame method, acetylene gas is introduced into a burner 22 in an atomization unit and burned to generate a flame F. This flame F atomizes the sample. Then, light is thrown from a light source 23 into the flame F. After undergoing absorption at specific wavelengths by the sample atoms in the flame F, the light is detected by a detector 24 for qualitative and quantitative determination of the sample.

In view of the above, according to the present embodiment, an optical sensor 21a is attached at a position immediately above the flame F (a position facing the flame F) on the top surface of the housing of the atomic absorption spectrometer 20, to capture light emitted from the flame F. Output signals from the optical sensor 21a are sent to a wireless communication interface 21b, and then transmitted to the management device 50 through the wireless communication network.

It should be noted that the light source 23 in the atomic absorption spectrometer 20 also generates light. A lamp is often used as the light source in the atomic absorption spectrometer 20. Since such a light source requires time to stabilize the amount of light it generates, the light source 23 is often kept lighting before initiation of the analysis as well as during the standby period for the analysis. Accordingly, the amount of light emitted from the light source 23 does not always correspond to the operating state (during execution of the analysis) of the atomic absorption spectrometer 20.

By comparison, the flame F is generated only during the atomization of the sample in the burner 22. Thus, by detecting an emission of light from the flame F, it can be confirmed that the atomic absorption spectrometer 20 is in the operating state (during execution of the analysis). In other words, in the atomic absorption spectrometer 20, the optical sensor 21a works as the measurement unit; the burner 22 of the atomization unit corresponds to the specified part; and the amount of light emitted from the flame F generated by the burner 22 corresponds to the specified physical property.

In the atomic absorption spectrometer 20, a temperature sensor may be used in place of the optical sensor 21a to detect the increase in the temperature of the housing which occurs when the flame is generated. In this case, the temperature sensor works as the measurement unit; a position which is in the vicinity of the burner 22 in the housing corresponds to the specified part; and the temperature at that position corresponds to the specified physical property. Furthermore, in the atomic absorption spectrometer 20, a pressure gauge may be used to measure the gas pressure of the fuel gas, such as acetylene gas, sent to the burner 22 when the flame F is generated.

In the atomic absorption spectrometer 30 that measures a sample with the furnace method, a sample is introduced into a heating furnace 32 in an atomization unit, and the furnace is energized to heat the sample and thereby generate atomic vapor from the sample. Then, the atomic vapor is irradiated with light from a light source 33. After undergoing absorption at specific wavelengths, the light is detected by a detector 34 for qualitative and quantitative determination of the sample.

In view of the above, according to the present embodiment, a temperature sensor 31a is attached to a position immediately beneath the heating furnace 32 on the housing of the atomic absorption spectrometer 30, to detect the increase in the temperature of the housing which occurs when the heating furnace 32 is energized. Output signals from the temperature sensor 31a are sent to a wireless communication interface 31b, and then transmitted to the management device 50 (described later) through a wireless communication network (not shown).

Similar to the atomic absorption spectrometer 20, the atomic absorption spectrometer 30 that uses the furnace method energizes the heating furnace 32 only when a sample is atomized. Therefore, by detecting the increase in the temperature of the housing which occurs when the furnace is energized, it can be confirmed that the atomic absorption spectrometer 30 is in the operating state (during execution of the analysis). In other words, in the atomic absorption spectrometer 30, the temperature sensor 31a works as the measurement unit; the heating furnace 32 of the atomization unit corresponds to the specified part; and the temperature of the housing at a position in the vicinity of the heating furnace 32 corresponds to the specified physical property.

In the atomic absorption spectrometer 30 that measures a sample with the furnace method, a heating furnace 32 made of graphite is usually used. The heating furnace 32 made of graphite emits light when being electrically energized. Accordingly, in the atomic absorption spectrometer 30, an optical sensor can also be used in place of the temperature sensor 31a. In this case, the optical sensor works as the measurement unit; the heating furnace 32 of the atomization unit corresponds to the specified part; and the amount of light emitted from the heating furnace 32 corresponds to the specified physical property.

Furthermore, in the atomic absorption spectrometer 30 that measures a sample with the furnace method, a change in the amount of current or change in power consumption which occurs when the heating furnace 32 is energized can also be measured with a current meter or a voltmeter.

In addition, an optical sensor can also be provided to detect the lighting of a power light in the analysis device. In a particular case, the power light may emit light in different colors depending on the state of the analysis device, such as being in a suspended state, standby for the analysis (including a state during the preparation for an analysis), and during execution of the analysis. In such a case, it is preferable to use, as the measurement unit, an optical sensor that can detect only the color of the light that is emitted during execution of the analysis (i.e., the optical sensor does not react to the other colors of light which indicate the suspended state or the standby state).

The management device 50 is now described. The management device 50 includes a storage section 51, a wireless communication interface 52, and an analog-to-digital (A/D) converter 53. In addition, the management device 50 also includes, as its functional blocks, a measurement signal receiver 54, an operating-state determiner 55, and an operating-time calculator 56. The management device 50 is actually a personal computer, with an input unit 60 and a display unit 70 connected to it.

In the storage section 51, operating-state specification information is previously stored, which is the information relating to a change in a specified physical property which occurs at a specified part of each of the analysis devices only during execution of the analysis. The measurement signal receiver 54 receives output signals from each of the sensors through the wireless communication interface 52. The received signals are converted into digital signals in the A/D converter 53, and then stored in the storage section 51. The operating-state determiner 55 determines the state of operation of each of the analysis devices based on the values of the output signals stored in the storage section 51. The operating-time calculator 56 calculates an operating time period of each of the analysis devices based on the determination results of the operating-state determiner 55.

Fig. 2 shows an example of the operating-state specification information in the present embodiment. The operating-state specification information includes the following items of information for each analysis device to be managed: name of the analysis device, part at which a distinctive change in a physical property occurs when the device is in the operating state, type of measurement unit, type of the physical property to be measured, and determination threshold value of the physical property. Specifically, the description concerning the liquid chromatograph 10 includes the following information: The vibration sensor 11a that detects the vibration caused by the motor M is attached; and when the magnitude of the vibration at X [Hz] measured by the vibration sensor 11a is more than or equal to A, the liquid chromatograph 10 is considered to be in the operating state. In addition, information indicating that the vibration reflecting the operating state periodically occurs is also included. As for the atomic absorption spectrometer 20, the description includes the following information: The optical sensor 21a that measures the amount of light emitted from the flame F of the burner 22 is attached; and when the intensity of the light at wavelength Y [nm] measured by the optical sensor 21a is more than or equal to B, the atomic absorption spectrometer 20 is considered to be in the operating state. In addition, information indicating that an emission of light which reflects the operating state continuously occurs is also included. As for the atomic absorption spectrometer 30, the description includes the following information: the temperature sensor 31a that measures the temperature of the housing in the vicinity of the heating furnace 32 is attached; and when the temperature of the housing measured by the temperature sensor 31a is more than or equal to C degrees Celsius, the atomic absorption spectrometer 30 is considered to be in the operating state. In addition, information indicating that the increase in temperature which reflects the operating state continuously occurs is also included.

The measurement signal receiver 54 receives output signals (analog signals) from the vibration sensor 11a, the optical sensor 21a, and the temperature sensor 31a. The received signals are converted into digital signals in the A/D converter 53, and then stored in the storage section 51.

The operating-state determiner 55 reads accumulated data from the storage section 51 once every predetermined period of time (e.g., every day), and determines the state of operation of the liquid chromatograph 10 and that of the atomic absorption spectrometers 20 and 30.

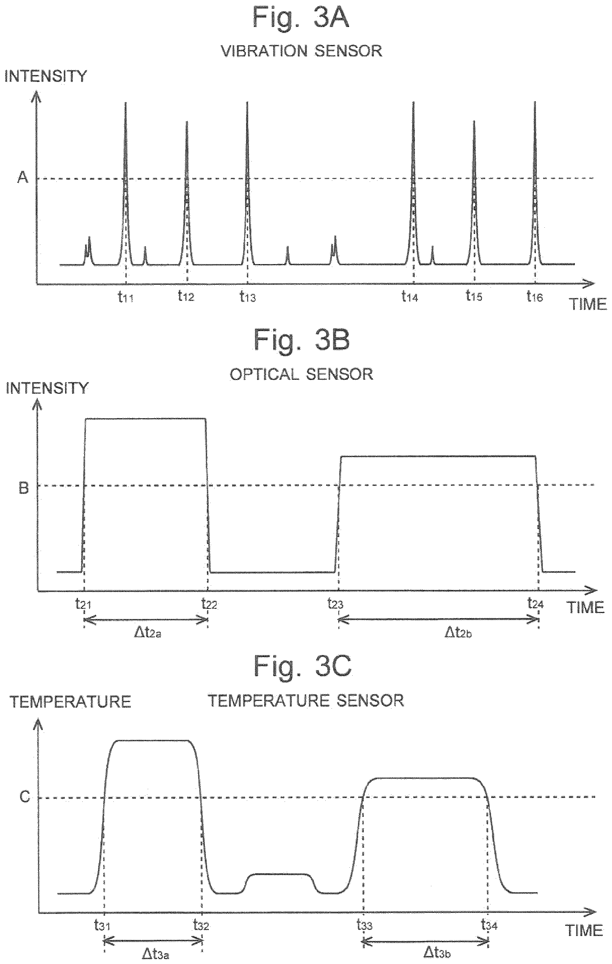

Figs. 3A-3C show examples of the data obtained by accumulating output signals from the vibration sensor 11a (Fig. 3A), the optical sensor 21a (Fig. 3B), and the temperature sensor 31a (Fig. 3C), respectively. As can be seen in the drawings, data which show intermittent occurrence of the vibration are obtained from the vibration sensor 11a, while data which show continuous occurrence of the flame F, and data which show a temperature increase of the housing, are obtained from the optical sensor 21a and the temperature sensor 31a, respectively.

With reference to the operating-state specification information stored in the storage section 51, the operating-state determiner 55 determines the state of operation of each of the analysis devices from the accumulated data of the output signals from the respective sensors, based on whether the change in the physical property obtained by the output signals from each of the sensors has the specified form, i.e. periodic or continuous. The operating-time calculator 56 subsequently sums up the time periods identified as the operating state by the operating-state determiner 55, calculates an operating time period of each of the analysis devices, and stores the calculated operating time periods in the storage section 51 as well as displays the calculated result on a screen of the display unit 70. The operating-time calculator 56 can also display the operating time and operation rate of each of the analysis devices on the screen of the display unit 70 in response to a command from an operator through the input unit 60 and the like.

First, a description is given to a case where the physical property continuously changes as shown in Figs. 3B and 3C (the atomic absorption spectrometers 20 and 30). The operating-state determiner 55 initially specifies a time period in which the measured physical property is more than or equal to a threshold value described in the operating-state specification information. Specifically, it is determined from Fig. 3B that the atomic absorption spectrometer 20 was in the operating state during a time period from t₂₁ to t₂₂ (Δt₂ₐ) and a time period from t₂₃ to t₂₄ (Δt_{2b}). It is also determined from Fig. 3C that the atomic absorption spectrometer 30 was in the operating state during a time period from t₃₁ to t₃₂ (Δt₃ₐ) and a time period from t₃₃ to t₃₄ (Δt_{3b}). As shown in Fig. 3C, an increase in the temperature of the housing also occurred during the time period from t₃₂ to t₃₃, but this increase in temperature did not exceed the threshold value. Accordingly, it is determined that this increase in temperature was caused by some external factor, such as an increase in the room temperature of the analysis room, (in other words, the device was not in the non-operating state).

Upon completion of the determination, by the operating-state determiner 55, of the time period during which each of the devices was in the operating state, the operating-time calculator 56 calculates the operating time period of each of the analysis devices, and stores the calculated operating time period in the storage section 51. Specifically, the total time period of Δt₂ₐ+Δt_{2b} is stored as the operating time period of the atomic absorption apparatus 20 in the storage section 51, while the total time period of Δt₃ₐ+Δt_{3b} is stored as the operating time period of the atomic absorption apparatus 30. Those total time periods are displayed on the screen of the display unit 70.

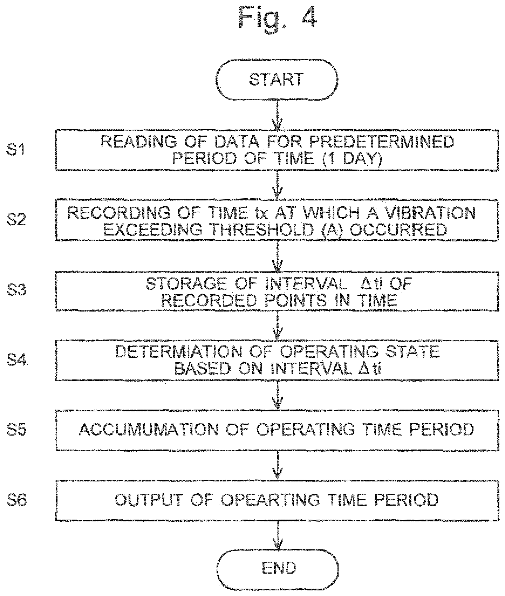

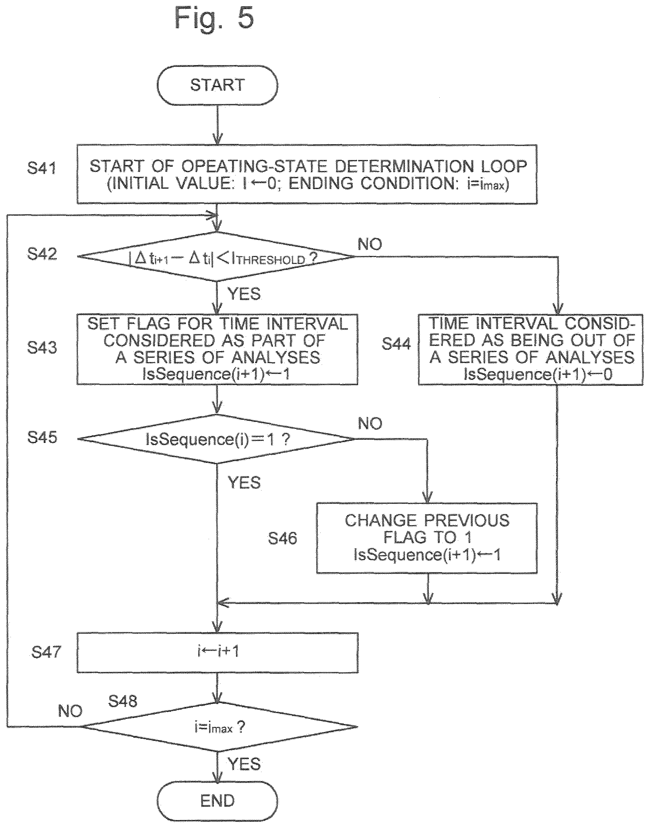

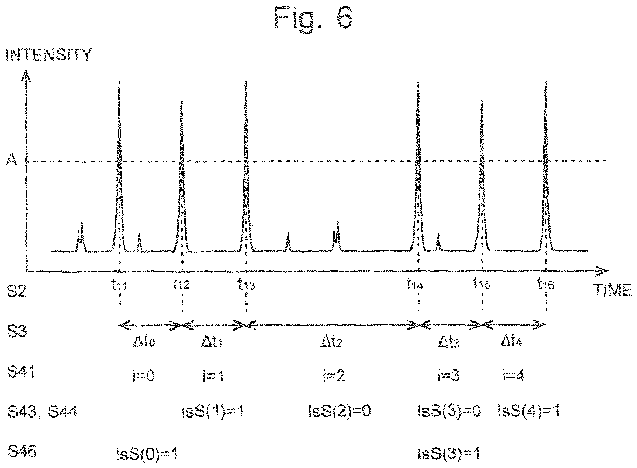

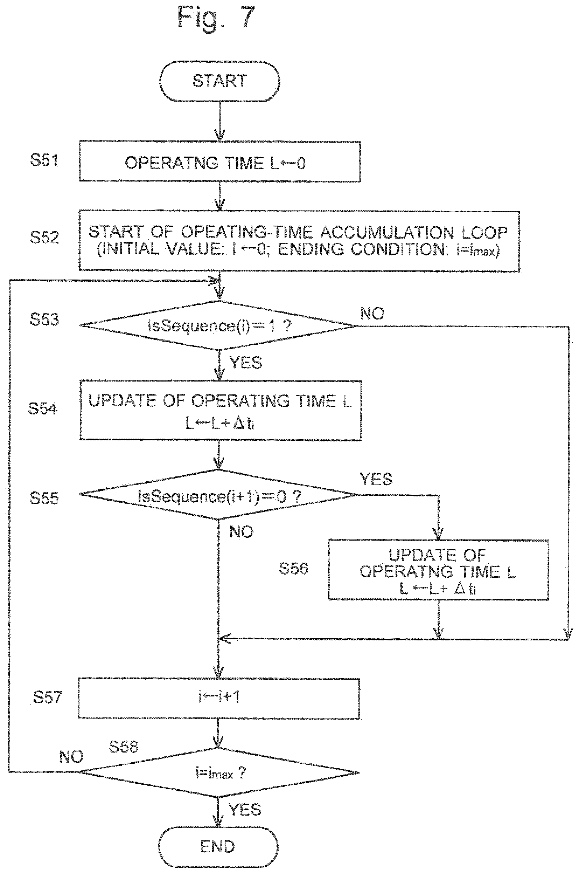

Next, a description is given to a case where the physical property intermittently changes as shown in Fig. 3A (liquid chromatograph 10), with reference to Figs. 4 to 7. Fig. 4 is a flowchart relating to the determination of the state of operation and the calculation of the operating time period. Fig. 5 is a detailed flow chart relating to the determination of the state of operation. Fig. 6 shows an example of the processing of the data shown in Fig. 3A. Fig. 7 is a detailed flowchart relating to the calculation of the operating time.

In the liquid chromatograph 10, a plurality of liquid samples are sequentially measured under the same measurement conditions. Therefore, the time periods taken by the respective samples for the analysis are substantially the same, and the time intervals at which the motor M operates for collecting the liquid samples are also constant. Based on this fact, the state of operation is determined in the present embodiment in such a manner that a period of time during which the motor M operates at substantially regular intervals of time is considered as a series of analyses, whereas an interval of time which is significantly different from the regular interval of time is considered to be out of the series of analyses.

First, the operating-state determiner 55 reads output signals for one day from the vibration sensor 11a, which are stored in the storage section 51 (Step S1). Subsequently, the operating-state determiner 55 locates time points (t₁₁ to t₁₆) at which output signals equal to or more than the threshold value (A) described in the operating-state specification information have been received, and stores the located time points in the storage section 51 (Step S2). Furthermore, the operating-state determiner 55 calculates time intervals (Δt₀ to Δt₄) between the located time points (t₁₁ to t₁₆), and stores the calculated time intervals in the storage section 51 (Step S3). Then, the operating-state determiner 55 determines whether or not each of the time intervals (Δt₀) to Δt₄) corresponds to the operating state (Step S4).

At the beginning of Step S4, an operating-state determination loop is initialized. The serial numbers i starting from 0 are allocated to Δt₀ to Δt₄, and the number of time intervals (5) is set as the value of iₘₐₓ (Step S41).

Then, with i = 0 as the initial value, the processing advances to Step S42, and the value of Δtᵢ₊₁ - Δtᵢ is compared with the threshold value. The threshold value used here is a reference value for determining whether or not the time interval should be considered as a part of a series of analyses.

In Step S42, if Δtᵢ₊₁ - Δtᵢ is smaller than the threshold value (YES in Step S42), the i+1^{st} flag is set to 1 (IsSequence (i + 1) = 1) (Step S43). Conversely, if Δtᵢ₊₁ - Δtᵢ is larger than the threshold value (NO in Step S42), the time interval is considered as being out of the series of analysis, and no flag is set (Step S44). After Step S44, the processing advances to Step S47.

After the flag is set in Step S43, the operating-state determiner 55 determines whether or not the previous flag is set (IsSequence (i) = 1). If the previous flag has already been set (YES in Step S45), the processing advances to Step S47. If the previous flag is not set yet (NO in Step S45), this flag is changed to 1 (Step S46), and the processing advances to Step S47.

In Step S47, the value of i is incremented by one (i.e., the value is increased to i = 1). If the new value of i is less than iₘₐₓ (NO in Step S48), the processing returns to Step S42 and the previously described steps are repeated. Conversely, if the incremented value of i has reached iₘₐₓ (YES in Step S48), the processing in Step S4 is terminated. Through the processing described to this point, the flag (IsSequence (i) = I) that indicates the operating state is set for each of the time intervals of Δt₀, Δt₁. Δt₃, and Δt₄.

After the flags have been set by the operating-state determiner 55, the operating-time calculator 56 calculates the operating time period of the liquid chromatograph 10 (Step S5). Fig. 7 is a flowchart showing a specific flow of the processing in Step S5.

At the beginning of Step S5, the operating-time calculator 56 sets, a variable L (initial value L = 0) that indicates the operating time period of the liquid chromatograph (Step 551). Then, the processing of the operating-state accumulation loop is initiated, with i = 0 as the initial value (Step S52).

In the beginning, a value of IsSequence (i) for i = 0 is checked to determine whether or not the flag is indicates that the time interval concerned is considered as the operating time. If IsSequence (i) = 1 (YES in Step S53), Δt₀ is added to the operating time period L (Step S54), and the processing advances to Step S55. On the other hand, if IsSequence (i) = 0 (NO in Step S53), the processing advances to Step S57.

In Step S55, the next flag is checked. In other words, whether or not IsSequence (i + 1) = 0 is determined. If IsSequence (i + 1) = 0 (YES in Step S55), Δtᵢ is further added to the operating time period L which has been updated in Step S54. On the other hand, if IsSequence (i + 1) = 1 (NO in Step S55), the processing advances to Step S57. The reason why Δtᵢ is added when IsSequence (i + 1) = 0 is as follows.

In the previously described flowchart regarding Step S4, the time difference between Δtᵢ and Δtᵢ₊₁ is compared with the threshold value. Accordingly, no flag can be set for the time interval corresponding to the time period of the analysis after the last operation of the motor M in one series of analyses. Accordingly, if only the time periods for which the flag of IsSequence (i) = 1 is set are totaled as the operating time period, the time period of the analysis for the last sample will be omitted. To cope with this situation, the processing of adding, to the operating time period L, a time period (Δtᵢ) which is supposed to be the time period of the analysis for the last sample is carried out in Step S55 and Step S56. Although no flag is set for Δt₂ in the present embodiment, the analysis is conducted one time after the motor M is operated at the time point t₁₃. Therefore, the time period Δtᵢ corresponding to this analysis is added to the operating time period L.

After the steps described to this point, the processing reaches Step S57, where the value of i is incremented by one (i.e., the value is increased to i = 1). If the value of i is less than iₘₐₓ (NO in Step S57), the processing returns to Step S53 and the previously described steps are repeated. Conversely, if the incremented value of i has reached iₘₐₓ (YES in Step S57), the processing in Step S5 is terminated. Thus, the operating time period L of the liquid chromatograph 10 is obtained.

The operating-time calculator 56 displays the calculated operating time period on the screen of the display unit 70 after the completion of Step S5. At this time, if an operator requests the display of the operation rate through the input unit 60, the value obtained by dividing the operating time period by a predetermined time period (one day in the present embodiment) is displayed on the screen of the display unit 70 along with the operating time period.

The aforementioned embodiment is an example of the present invention, and can be appropriately modified along the purposes of the present invention. Although the liquid chromatograph and the atomic absorption spectrometers are described as an example of the devices to be managed, the configuration in the present embodiment can also be similarly applied to other types of analysis devices. Furthermore, the configuration according to the present invention is not limited to analysis devices, but can also be used for manufacturing devices and machining devices. In other words, for any device in which a change in a specific physical property occurs only during the operation, a measurement unit at a specified part can be attached to a position where the change in the physical property occurs, and the operating time period can be calculated based on output signals from the measurement unit.

In the aforementioned embodiment, a configuration is described in which the operating time period is calculated for each of the analysis devices disposed in a single analysis room. The system can also be configured to collect output signals from measurement units mounted on the devices to be managed disposed in a plurality of rooms, and collectively manage the operating time periods of all those devices. Furthermore, in the aforementioned embodiment, the output signal of each of the sensors is sent to the management device through a wireless communication interface. Here, the sensors may be connected to the management device by wires to send and receive output signals.

Although the vibration sensor, the optical sensor, the temperature sensor, the pressure gauge, the current meter, and the voltmeter are listed as examples of the measurement units in the aforementioned embodiment, the measurement unit in the present invention is not limited to those types. Any type of measurement unit suitable for measuring a specific physical property that changes at a specified part of the device to be managed during the operation can be used for the present invention.

In the aforementioned embodiment, the operating-state determiner 55 reads the accumulated data for a predetermined time period from the storage section 51 to determine the state of operation. Here, signals received from the measurement unit may be processed in real time to determine the state of operation.

### REFERENCE SIGNS LIST

- 1: Analysis Room
- 10: Liquid Chromatograph
- 10a: Autosampler
- 11, 21, 31: Measurement Unit
- 11a: Vibration Sensor
- 11b, 21b, 31b: Wireless Communication Interface
- 20: Atomic Absorption Spectrometer
- 21a: Optical Sensor
- 22: Burner
- 23, 33: Light Source
- 24, 34: Detector
- 30: Atomic Absorption Spectrometer
- 31a: Temperature Sensor
- 32: Heating Furnace
- 50: Management Device
- 51: Storage Section
- 52: Wireless Communication Interface
- 53: A/D Converter
- 54: Measurement Signal Receiver
- 55: Operating-State Determiner
- 56: Operating-Time Calculator
- 60: Input Unit
- 70: Display Unit
- F: Flame
- M: Motor

## Claims

1. A device-operation information collection system comprising:
a) a storage section in which operating-state specification information is stored, the operating-state specification information being allocated to each of one or a plurality of devices to be managed, and relating to a change in a specified physical property which occurs only during an operating state at a specified part of each of the one or a plurality of the devices to be managed;
b) a measurement unit that is attached to each of the one or a plurality of devices to be managed, configured to measure the specified physical property at the specified part of each of the one or a plurality of devices to be managed;
c) a measurement signal receiver configured to receive a measurement signal or measurement signals from the measurement unit or a plurality of measurement units;
d) an operating-state determiner configured to compare a change in the received measurement signal with the operating-state specification information for each of the one or a plurality of devices to be managed, to thereby determine a state of operation for each of the one or a plurality of devices to be managed; and
e) an operating-time calculator configured to calculate an operating time period of each of the one or a plurality of devices to be managed, from a result of determination by the operating-state determiner.

2. The device-operation information collection system according to claim 1, wherein
each of the measurement unit and the measurement signal receiver includes a wireless communication interface for sending and receiving the measurement signals.

3. The device-operation information collection system according to claim 1 or 2, wherein
the operating-state determiner is configured to create data in which the measurement signals received from the measurement unit are accumulated for a predetermined time period, and use the data for determining the state of operation of each of the devices to be managed.

4. The device-operation information collection system according to claim 3, wherein
the operating-state determiner is configured to extract periodic change in the physical property from the data prepared by accumulating the measurement signals for the predetermined time period, to thereby determine the state of operation.
